# EUROPEAN PATENT APPLICATION

(11) **EP 2 027 901 A1**
(43) Veröffentlichungstag der Anmeldung: **25.02.2009**
(21) Anmeldenummer: 07748795.7
(22) Anmeldetag: 03.04.2007
(51) Int. Cl.: B01D 3/30, B01D 3/20

(54) **STOFFAUSTAUSCHKONTAKTVORRICHTUNG**

(30) Priorität: 10.04.2006 UA 2006003889
(71) Anmelder: Maleta, Bogdan Vladimirovich, Jagotin 07700 (UA); Maleta, Olesja Vladimirovna, Jagotin 07700 (UA)
(72) Erfinder: Maleta, Bogdan Vladimirovich, Jagotin 07700 (UA); Maleta, Olesja Vladimirovna, Jagotin 07700 (UA)
(74) Vertreter: Jeck, Anton
(86) Internationale Anmeldenummer: PCT/UA2007/000021
(87) Internationale Veröffentlichungsnummer: WO 2007/117227

(57) **Zusammenfassung**

Die Erfindung bezieht sich auf eine Kontaktvorrichtung zum Stoffaustausch, welche einen Boden mit einem Kontaktteil, einem zusätzlichen Boden, einen Mantel mit Umfangsöffnungen, ein bewegliches 2-Wege-Ventil umfasst, wobei sich das letztere aus übereinander angeordneten und mittels Abstandsstütze gekoppelten Vollplatten zusammensetzt. Die Ursache-Wirkungsbeziehung zwischen diesen Merkmalen und die Betriebsweise der Kontaktvorrichtung beim Durchgang von Gas/Dampf wird **dadurch** verbessert, dass der Außenraum des Kontaktteils mittels eines Gehäuses durch die obere Reihe der Öffnungen im Mantel mit dem Innenraum des Mantels gekoppelt ist.

## Beschreibung

Die Erfindung bezieht sich auf eine Kontaktvorrichtung zum Stoffaustausch nach dem Oberbegriff des Anspruches 1.

Die Erfindung betrifft eine Vorrichtung, welche zur Durchführung der zyklischen Stoffaustauschvorgänge in einem Glas (Dampf)-Flüssigkeits-System (beim getrennten Phasenablauf in der Kolonne) bestimmt ist. Die Vorrichtung kann in der Lebensmittelindustrie, der chemischen, erdölchemischen und -verarbeitenden Industrie und anderen Industriegebieten angewendet werden.

Bekannt ist eine Kontaktvorrichtung zum Stoffaustausch, welche einen Boden (weitere Bezeichnungen: Tellerboden, Platte) mit Kontaktteilen enthält. Am Umfang des Kontaktteils im Boden sind ringförmige Öffnungen mit Brücken ausgebildet. Unter dem Kontaktteil ist eine Zentralöffnung ausgeführt. Unter dem Boden sind ein Stutzen und ein Mantel axial zu dieser Zentralöffnung angeordnet. Der Mantel ist mit einem in der Mitte angeordneten beweglichen 2-Wege-Ventil ausgerüstet. Das Ventil setzt sich aus übereinander angeordneten und durch Abstandsstützen gekoppelten Platten mit Zentralöffnungen zusammen. In der oberen Öffnung ist der Stutzen verlegt. Unter der unteren Öffnung ist an der Stange zwischen den Hub- und Senkbegrenzern ein Unterbrechungsventil angeordnet (Urheberschein der USSR M 1307643).

Der Mangel der bekannten Vorrichtung besteht darin, dass
- die beweglichen Elemente der Konstruktion mehrteilig (zweiteilig) ausgebildet sind,
- der freie Stutzenquerschnitt für den Gas-/Dampfdurchgang beschränkt ist und
- der freie Querschnitt der ringförmigen Öffnungen zum Überlauf von Flüssigkeit beschränkt ist.

Diese Mängel erhöhen den hydraulischen Widerstand des Bodens beim Gas-/Dampfdurchgang und verlängern die Durchflussdauer der Flüssigkeit von Boden zu Boden.

Bekannt ist eine Kontaktvorrichtung zum Stoffaustausch, welche einen Boden mit einem Kontaktteil, einen Mantel, ein bewegliches 2-Wege-Ventil, einen Hub- und einen Senkbegrenzer umfasst. Der Mantel weist Umfangsöffnungen auf. Das bewegliche 2-Wege-Ventil ist in Form von übereinander angeordneten Vollplatten ausgeführt. Dabei ist die Vorrichtung mit einem zusätzlichen Boden ausgerüstet.

Als Hubbegrenzer des beweglichen 2-Wege-Ventils dient das Kontaktteil, als Senkbegrenzer dient der untere Rand des Mantels. Die unteren Öffnungskanten des Mantels sind in der gleichen Höhe wie der zusätzliche (untere) Boden ausgeführt. Außerdem ist das Kontaktteil in Form einer inneren Glocke mit tangential abgebogenen Platten des Blasenmoduls (Blasenwirbelmodul, Blasensäule, bubble unit) ausgeführt. Die Höhe der senkrechten Umfangsöffnungen des Mantels entspricht der Höhe des beweglichen 2-Wege-Ventils. In den Endstellungen des 2-Wege-Ventils wird der freie Querschnitt der senkrechten Öffnungen des Mantels von einer der Platten des Ventils in gleiche Sektoren geteilt (RU 2237508 C1).

Der Mangel der bekannten Vorrichtung besteht darin, dass deren Betriebsbereich in Richtung der Erhöhung des Dampfverbrauchs bei großer Flüssigkeitsbelastung versetzt wird. Bei einer großen Durchflussmenge und mangelndem Dampfverbrauch erfolgt eine Selbstentlastung des Bodens, wobei das Ventil während der Dampfzuführung nach unten geht. Dadurch werden die optimalen Betriebsverhältnisse der Vorrichtung beim zyklischen Betrieb verhindert. Durch die Erhöhung des Dampfverbrauchs werden die Verhältnisse beeinträchtigt, bei denen die Flüssigkeit aus dem Zwischenbehälter auf den unten angeordneten Boden überläuft, bis die Kolonne abgesperrt ist.

Der Erfindung liegt die Aufgabe zugrunde, die bekannte Vorrichtung so zu verbessern, dass
- optimale Betriebsverhältnisse bei zyklischem Betrieb der Kontaktvorrichtung während der Durchführung der Stoffaustauschvorgänge sichergestellt sind,
- der Betriebsbereich der Flüssigkeits- und Dampfbelastung erweitert ist,
- die Wirkung des verzögerten Druckimpulses des Gas-/Dampfdurchgangs entlang der Kolonnenhöhe mittels autonomen Funktionierens des Kontaktvorrichtungsgehäuses bei getrenntem Phasenablauf vermindert ist,
- die Leistungsfähigkeit gesteigert ist und
- die Betriebszuverlässigkeit und Nutzungsdauer der Konstruktion erhöht ist.

Die gestellte Aufgabe wird durch die Merkmale des Anspruchs 1 gelöst.

Die Kontaktvorrichtung zum Stoffaustausch weist einen Boden mit einem Kontaktteil, einen Mantel, ein bewegliches 2-Wege-Ventil, einen Hub- und einen Senkbegrenzer auf. Im Mantel sind Umfangsöffnungen ausgeführt. Das bewegliche 2-Wege-Ventil ist in Form von übereinander angeordneten Vollplatten ausgeführt. Dabei ist die Vorrichtung mit einem zusätzlichen Boden ausgerüstet.

Als Hubbegrenzer des beweglichen 2-Wege-Ventils wird das Kontaktteil eingesetzt, als Senkbegrenzer dient der untere Rand des Mantels. Die unteren Öffnungskanten des Mantels sind in der gleichen Höhe wie der zusätzliche (untere) Boden ausgeführt. Außerdem ist das Kontaktteil in Form einer inneren Glocke mit tangential abgebogenen Platten des Blasenmoduls ausgeführt. Die Höhe der senkrechten Umfangsöffnungen des Mantels entspricht der Höhe des 2-Wege-Ventils. In den Endstellungen des 2-Wege-Ventils wird der freie Querschnitt der senkrechten Öffnungen des Mantels von einer der Platten des Ventils in gleiche Sektoren geteilt. Der Außenraum des Kontaktteils ist erfindungsgemäß mit dem Innenraum des Mantels mittels eines Gehäuses durch eine Reihe von Öffnungen im Mantel verbunden.

Die Ursache-Wirkungs-Beziehung zwischen den vorgeschlagenen Merkmalen und dem technischen Nutzeffekt besteht in Folgendem:
1. Die auf das 2-Wege-Ventil wirkende Auftriebskraft wird erhöht, während das Ventil bei maximal möglicher Druckdifferenz an dessen oberen Platte nach oben geht. Das Gas (der Dampf) gelangt nicht in den Raum über der oberen Platte.
2. Bei dem Gas-/Dampfdurchgang zum Kontaktteil über die obere Platte des 2-Wege-Ventils durch die obere Reihe der Öffnungen im Mantel und das Gehäuse wird der dynamische Dampfdruck als Zusatzkraft eingesetzt, um das Ventil in seiner oberen Stellung zu halten.
3. Bei sinkendem oder schwankendem Gas-/Dampfverbrauch für den beständigen (z. B. 10 %) freien Querschnitt des Kontaktteils während des Gas-/Dampfdurchganges (und somit wird der Druckdifferenz am Boden vermindert) geht das Ventil nach unten bis zu der oberen Reihe der Öffnungen im Mantel. Dadurch entsteht ein situationsbedingter freier Querschnitt für das Gas (Dampf) mit bereits geringeren Werten (z. B. 2 %). Diese Werte sind jedoch ausreichend, um das Ventil in seiner oberen Stellung zur Stabilisierung der Druckdifferenz am Boden zu halten.
4. Beim allmählichen Absperren des Dampfes geht das Ventil nach unten, verlangsamt sich in der Höhe der oberen Reihe der Öffnungen im Mantel und setzt sich zügig (stoßfrei) auf den Senkbegrenzer. Dadurch wird die Nutzungsdauer der Konstruktion verlängert.

Die Erfindung wird anhand der in den Zeichnungen dargestellten Ausführungsbeispiele näher erläutert. Es zeigen:

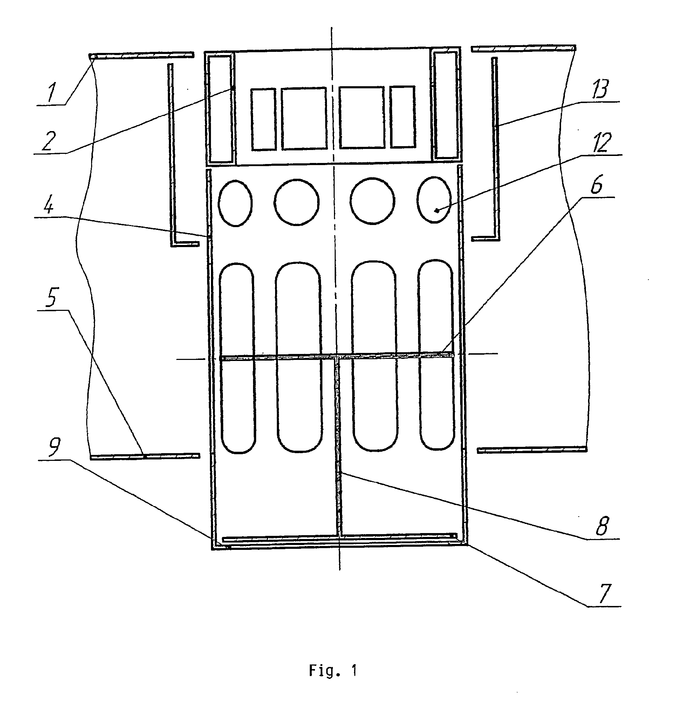

- Fig. 1: die Stellung der Vorrichtung im Anfangszeitpunkt der Gas-/Dampfzufuhr,

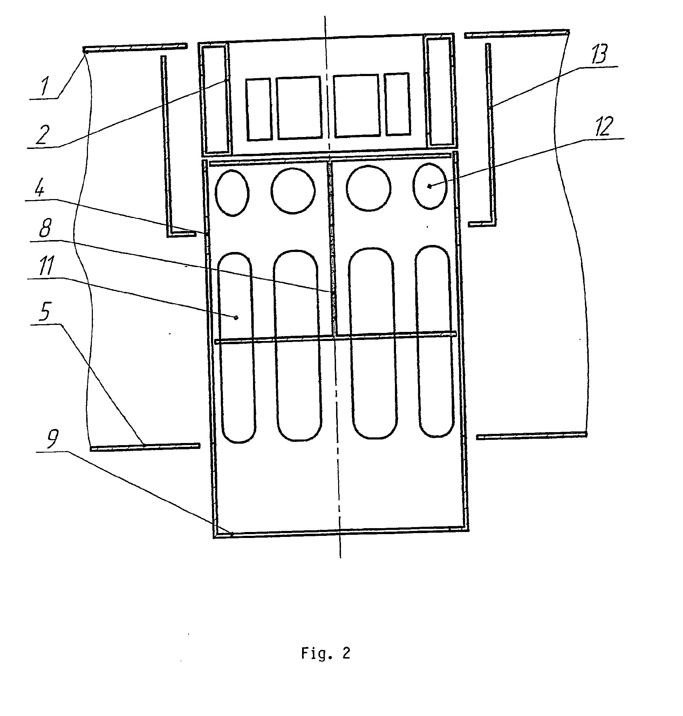

- Fig. 2: die Stellung der Vorrichtung im Zeitpunkt, bei dem der Angriff der Auftriebskraft von der unteren auf die obere Platte des 2-Wege-Ventils wechselt,

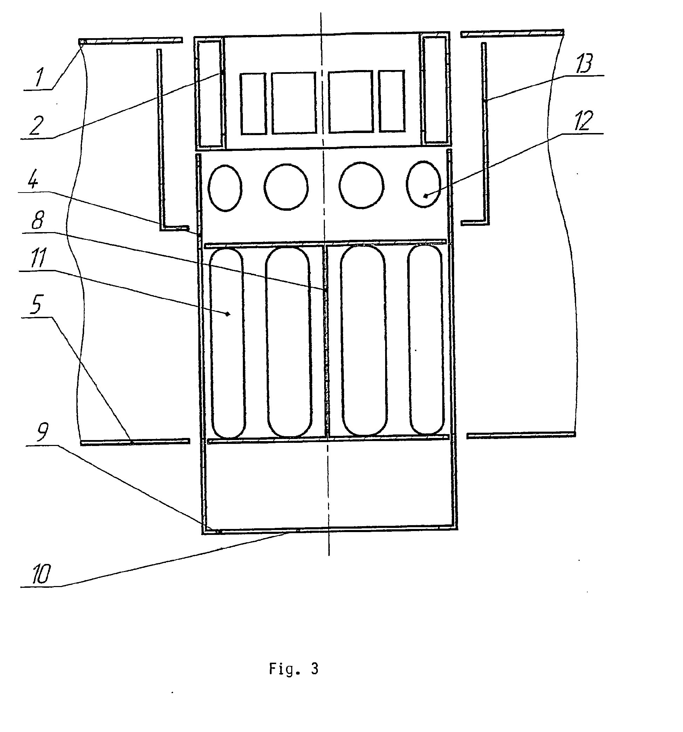

- Fig. 3: die Stellung der Vorrichtung, welche allen weiteren Zeitpunkten der Gas-/Dampfzufuhr entspricht,

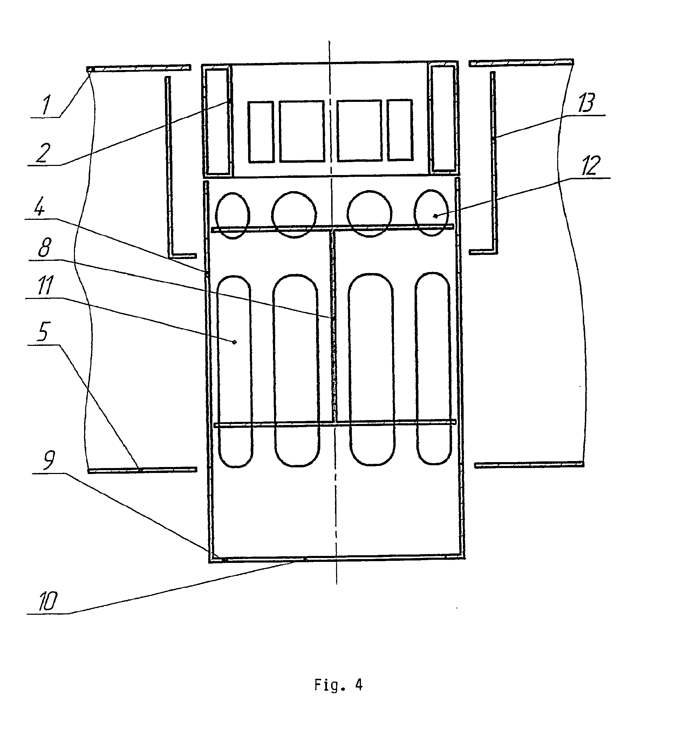

- Fig. 4: die Stellung der Vorrichtung bei der Bildung des situationsbedingten freien Querschnitts für den Gas-/Dampfdurchgang und

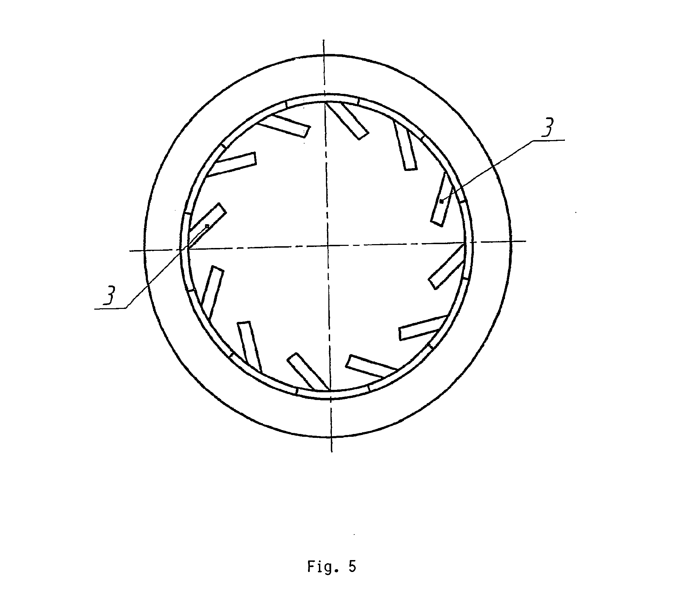

- Fig. 5: die Draufsicht auf die Vorrichtung.

Die Kontaktvorrichtung umfasst:
- einen Boden 1 (weitere Bezeichnungen: Tellerboden, Platte), auf dem ein Kontaktteil 2 mit tangential abgebogenen Platten eines Blasenmoduls (Blasenwirbelmodul, Blasensäule, bubble unit) 3 befestigt ist,
- einen Mantel 4 mit Öffnungen 10, 12, 11 unter dem Boden 1,
- einen zusätzlichen Boden 5,
- ein 2-Wege-Ventil aus einer oberen Platte 6 und einer unteren Platte 7, die miteinander mittels einer Abstandsstütze 8 gekoppelt sind.

Der abgebogene untere Rand des Mantels 4 wird als Senkbegrenzer 9 eingesetzt. Der Außenraum des Kontaktteils 2 ist mit dem Innenraum des Mantels 4 mittels eines Gehäuses 13 durch die obere Reihe der Öffnungen 12 im Mantel 4 gekoppelt.

Die Kontaktvorrichtung funktioniert folgenderweise:

Während der Dampfphase hebt die Gas-/Dampfphase das 2-Wege-Ventil in die obere feste Stellung, so dass die obere Platte 6 des 2-Wege-Ventils die Öffnung des Kontaktteils 2 schließt. Der Dampf geht über die obere Platte 6 durch die obere Reihe der Öffnungen 12 im Mantel 4 und das Gehäuse 13 hindurch und kommt ins Blasenmodul 3 des Kontaktteils 2. Hier durchströmt der Dampf die Flüssigkeitsschicht.

Nachdem die Dampfphase abgelaufen ist, geht das 2-Wege-Ventil unter der Wirkung seines Eigengewichts und dem Flüssigkeitsgewicht nach unten. Dabei verlangsamt sich das Ventil in der Höhe der oberen Reihe der Öffnungen 12 des Mantels 4 und setzt sich stoßfrei auf den Senkbegrenzer 9. Aus der Blasenzone des Bodens 1 fließt die Flüssigkeit durch die Öffnungen 11 des Mantels 4 in einen Raum, welcher durch den Mantel 4, den zusätzlichen (unteren) Boden 5 und das 2-Wege-Ventil beschränkt ist (Zwischenbehälter).

Die Verzögerung der Gas-/Dampfzufuhr wird durch die Überlaufdauer der Flüssigkeit vom Boden 1 in den Zwischenbehälter bestimmt und beträgt einige Sekunden.

Am Anfang der Gas-/Dampfzufuhr wirkt auf die untere Platte 7 des 2-Wege-Ventils die Auftriebskraft, welche durch die Druckdifferenz verursacht ist. Unter der Wirkung der Antriebskraft werden das 2-Wege-Ventil und anschließend die Flüssigkeit im Zwischenbehälter nach oben gefördert.

Sobald die Platten des 2-Wege-Ventils sich in der gleichen Höhe mit den Öffnungen 11 des Mantels 4 befinden, wird der Angriff der Auftriebskraft von der unteren Platte 7 auf die obere Platte 6 des 2-Wege-Ventils wechseln. Dabei wird die maximal mögliche Druckdifferenz und somit die Auftriebskraft an der oberen Platte 6 aufrechterhalten, denn das Gas (der Dampf) geht nicht durch das Gehäuse 13 in den Raum über der oberen Platte 6 hindurch.

Das Gas (der Dampf) strömt durch die Öffnungen 11 im Mantel 4 hindurch und durchströmt die Flüssigkeit unter Blasenbildung. Je größer die Öffnung ist, desto niedriger ist die Durchgangsgeschwindigkeit des Dampfs, welcher durch diese Öffnung hindurchströmt. Dies führt dazu, dass die Verhältnisse sichergestellt werden, bei denen die Flüssigkeit aus dem Zwischenbehälter auf den unten angeordneten Boden überläuft. Das 2-Wege-Ventil setzt die Bewegung nach oben bis zur oberen festen Stellung fort. Das Gewicht des 2-Wege-Ventils und der Flüssigkeitssäule darüber sollen weniger als die auf die obere Platte wirkende Druckdifferenzkraft sein.

Die Durchflussdauer der Flüssigkeit von einem Boden auf den anderen wird als Flüssigkeitsphase bezeichnet. Demgemäß läuft die Zykluszeit ab. Der Zyklus umfasst die Dampf- und die Flüssigkeitsphase. Weitere Zyklen laufen auf die gleiche Weise ab.

Die vorgeschlagene Kontaktvorrichtung ermöglicht es,
- den Stoffaustausch im Gas (Dampf)-Flüssigkeit-System bei zyklischem Betrieb mit einmaligem Wechsel der Flüssigkeitsverzögerung gleichzeitig auf allen Böden entlang der Kolonnenhöhe durchzuführen,
- den Betriebsbereich der Flüssigkeits- und Dampfbelastung zu erweitern,
- die Leistungsfähigkeit zu steigern und
- die Betriebszuverlässigkeit und die Nutzungsdauer der Konstruktion zu erhöhen.

Durch die Verwendung der vorgeschlagenen Kontaktvorrichtung wird das Aufrühren von Flüssigkeit auf den aneinander grenzenden Stufen des Kontaktteils behoben. Der Nutzeffekt von dem Stoffaustausch kann im Vergleich zum stationären Betrieb um das Doppelte oder Dreifache erhöht werden.

## Patentansprüche

1. Kontaktvorrichtung zum Stoffaustausch, welche einen Boden (1) mit einem Kontaktteil (2), einen zusätzlichen Boden (5), einen Mantel (4) mit Umfangsöffnungen (10, 11, 12), ein bewegliches 2-Wege-Ventil umfasst, wobei sich das Letztere aus übereinander angeordneten und mittels Abstandsstütze (8) gekoppelten Vollplatten (6, 7) zusammensetzt,
**dadurch gekennzeichnet,**
**dass** der Außenraum des Kontaktteils (2) mittels eines Gehäuses (13) durch die obere Reihe der Öffnungen (12) im Mantel (4) mit dem Innenraum des Mantels (4) gekoppelt ist.

2. Vorrichtung nach Anspruch 1,
**dadurch gekennzeichnet,**
**dass** die obere Reihe von Öffnungen des Mantels und die Öffnungen im Mantel durchgehend ausgeführt werden können.
